# EUROPÄISCHE PATENTSCHRIFT

(11) **EP 2 180 163 B1**
(45) Veröffentlichungstag und Bekanntmachung des Hinweises auf die Patenterteilung: **05.06.2013**
(21) Anmeldenummer: 09012735.8
(22) Anmeldetag: 08.10.2009
(51) Int. Cl.: F02C 6/12, F01D 11/02, F01D 25/24, F01D 9/02, F16J 15/34

(54) **Turbinengehäuse und Verfahren zu seiner Herstellung**
Turbine housing and method for its production
Boîtier de turbines et son procédé de fabrication

(30) Priorität: 21.10.2008 DE 102008052552
(43) Veröffentlichungstag der Anmeldung: 28.04.2010
(73) Patentinhaber: Benteler Automobiltechnik GmbH, 33102 Paderborn (DE)
(72) Erfinder: Grussmann, Elmar, 33184 Buke (Altenbeken) (DE); Smatloch, Christian, 33100 Paderborn (DE)
(74) Vertreter: Griepenstroh, Jörg

(56) Entgegenhaltungen:
- EP-A2- 1 647 754
- WO-A1-02/29211
- FR-A1- 2 269 020
- GB-A- 2 449 907
- JP-A- 2003 214 570

## Beschreibung

Die Erfindung betrifft ein Verfahren zur Herstellung eines Turbinengehäuses mit den Merkmalen des Oberbegriffs des Patentanspruchs 1 sowie ein solches Turbinengehäuse.

Brennkraftmaschinen für Kraftfahrzeuge werden im zunehmenden Maße durch Turbolader aufgeladen, da sich hierdurch eine Reduzierung des Kraftstoffverbrauchs erzielen lässt. Aber auch das Gewicht der Abgasanlage selbst hat Einfluss auf den Kraftstoffverbrauch. Turbolader sollten daher ein möglichst geringes Gewicht besitzen. Dem steht entgegen, dass Turbolader während ihres Einsatzes erheblichen mechanischen und insbesondere höchsten thermischen Belastungen ausgesetzt sind, die eine robuste Bauweise erforderlich machen. Allerdings wird auf Grund der zunehmenden Anzahl von Aggregaten der zur Verfügung stehende Bauraum innerhalb des Motorraums immer geringer.

Im Stand der Technik sind eine Vielzahl von Vorschlägen gemacht worden, um Turbolader möglichst leicht aber auch mit der gewünschten Lebensdauer aufzeigen zu können. Wesentlichen Einfluss auf die Lebensdauer eines Turboladers haben thermisch induzierte Spannungen. Es sind somit entsprechende thermische Ausgleichselemente vorzusehen, die allerdings Dichtigkeitsprobleme mit sich bringen. In der DE 100 22 052 A1 wird zur Lösung dieses Problems beispielsweise die Entkopplung von abgasführenden Bauteilen und tragenden bzw. dichtenden Außenstrukturen vorgeschlagen. Die in der DE 100 22 052 A1 gezeigte Anordnung ermöglicht zwar eine dichte Anbindung des Innensystems an das Außensystem, sie kann allerdings die auftretenden thermischen Spannungen nur durch Deformation der Bauteile beantworten. Dadurch ergibt sich das Risiko der Kollision des Innensystems bzw. des Laufradgehäuses mit dem Turbinenrad.

In der Praxis zeigt sich allerdings, dass auch das Innensystem gewisse Dichtigkeitsanforderungen erfüllen muss, um eine effiziente Arbeitsweise des Turboladers sicherzustellen. In der DE 103 52 960 A1 werden mehrere Möglichkeiten aufgezeigt, um das Problem der Dichtigkeit und gleichzeitigen Dauerfestigkeit zu lösen. Konkret wird ein Schiebesitz vorgeschlagen, der thermisch bedingte Spannungen zwischen einem Laufradgehäuse und Abgas zu einem Auslassflansch führenden Überströmbereich vermeiden soll. In der DE 103 52 960 A1 wird zwar aufgezeigt, wie der Dehnungsausgleich realisiert werden kann, allerdings können die auftretenden thermomechanischen Belastungen die hieraus resultierenden, zwingend notwendigen Materialeigenschaften sowie die zum einwandfreien Betrieb notwendigen Fertigungstoleranzen eine wirtschaftliche Fertigung des Gehäuses gefährden.

Zum Stand der Technik ist ferner die WO 02/29211 A1 zu nennen. Es wird ein Verfahren zur Herstellung eines Turbinengehäuses eines Turboladers beschrieben. Die radial äußeren Randbereiche des Turboladergehäuses werden jeweils nach außen umgebogen, so dass einander gegenüberliegende Flansche entstehen, die stoffschlüssig miteinander verbunden werden. Im inneren Bereich werden einzelne Laschen in Axialrichtung gebogen, wobei diese Laschen ein konisch gestaltetes Auslassrohr zwischen sich aufnehmen. Durch die geringe Konizität soll eine dichte Anlage ermöglicht werden. Die Dichtwirkung kann auch dadurch erreicht werden, dass die beiden Bauteile miteinander verschweißt oder verschraubt werden. Diese Art der Fixierung hat jedoch den Nachteil, dass enge Fertigungstoleranzen eingehalten werden müssen und dass in diesem Bereich thermisch bedingte Spannungen auftreten.

Hiervon ausgehend liegt der Erfindung die Aufgabe zu Grunde, ein Turbinengehäuse eines Abgasturboladers sowie ein Verfahren zu seiner Herstellung aufzuzeigen, bei welchem bei maximaler Dichtwirkung des Innensystems ein Temperaturdehnungsausgleich zwischen dem Laufradgehäuse und einem Auslassrohr für das Abgas möglich ist, wobei zugleich sehr dünne Werkstoffe zum Einsatz kommen können und ohne dass Schweißarbeiten im sensiblen Auslassbereich des Laufradgehäuses erforderlich sind.

Die Erfindung löst diese Aufgabe durch ein Verfahren mit den Merkmalen des Patentanspruchs 1. Ein erfindungsgemäßes Turbinengehäuse ist Gegenstand des Patentanspruchs 8. Die Unteransprüche betreffen jeweils vorteilhafte Weiterbildungen des Erfindungsgedankens.

Das beanspruchte Verfahren dient zur Herstellung eines Turbinengehäuses eines Abgasturboladers. Das Turbinengehäuse soll ein Außengehäuse und eine in dem Außengehäuse angeordnete Innenstruktur umfassen. Zu der Innenstruktur zählt ein Laufradgehäuse mit einem rohrförmigen Stutzen, welcher in ein Auslassrohr mündet, über welches Abgas von dem Laufradgehäuse in Richtung eines Auslassflansches überleitbar ist. Das Auslassrohr ist zur Kompensation von thermisch induzierten Längendehnungen relativ verschieblich mit dem Laufradgehäuse gekoppelt. Bei dem erfindungsgemäßen Verfahren ist vorgesehen, dass ein an dem Auslassrohr angeordneter metallischer Dichtring über den Stutzen geschoben wird und dass anschließend ein Spreizdorn in den Stutzen eingeführt wird um den Stutzen aufzuweiten.

Der Vorteil dieser Vorgehensweise ist, dass sowohl hinsichtlich des Dichtrings als auch hinsichtlich des Stutzens etwas größere Fertigungstoleranzen gewählt werden können, weil die angestrebte Dichtwirkung zwischen dem Stutzen und dem Auslassrohr nachträglich durch Einstellen eines Dichtspalts mittels des Spreizdorns erreicht wird. Der Spreizdorn weitet den Stutzen gewissermaßen auf, bis dieser an dem Dichtring zur Anlage gelangt. Der Stutzen wird also mit einer definierten Kraft gegen den Dichtring gedrückt, wobei der Stutzen nach dem Entfernen des Spreizdorns zurückfedert. Dadurch stellt sich eine definierte Spaltbreite zwischen dem Dichtring und der Außenseite des Stutzens ein. Der Dichtring ist fest mit dem Auslassrohr verbunden und auch nach dem Aufweiten des Stutzens durch den Spreizdorn immer noch relativverschieblich gegenüber dem Stutzen. Bei dem erfindungsgemäßen Verfahren ist es möglich, sehr dünnwandige Innenstrukturen aus geeigneten Stahlwerkstoffen zu schaffen. Bei der Innenstruktur handelt es sich um Blechbauteile, vorzugsweise mit einer Wanddicke < = 1,0 mm. Durch sehr dünne Innenstrukturen ist der Energieverlust während der Warmlaufphase des Motors gering. Eine unerwünschte Abkühlung des Abgases wird verhindert, so dass das Emissionsverhalten des Gesamtsystems im Hinblick auf das Anspringen eines nachgeschalteten Katalysators verbessert wird. Bei dem erfindungsgemäßen Verfahren ist es zwar erforderlich, einen metallischen Dichtring hinreichender Widerstandskraft und daher auch mit einer bestimmten Masse einzusetzen. Dieses Mehrgewicht kann allerdings dadurch kompensiert werden, dass sehr dünnwandige Innenstrukturen verwendet werden können, sowohl was das Auslassrohr als auch das Laufradgehäuse betrifft.

Der Stutzen wird endseitig zumindest bereichsweise nach außen ausgestellt, um wenigstens eine Ausstellung zu bilden, deren Durchmesser größer ist, als der Innendurchmesser des Dichtrings. Eine solche Ausstellung kann punktuell vorgesehen sein, d.h. es kann sich um wenigstens eine vorzugsweise, aber zwei oder mehr Ausstellungen handeln, die vorzugsweise gleichmäßig über den Umfang des Stutzens verteilt angeordnet sind. Es kann sich selbstverständlich auch um einen umlaufenden Kragen handeln.

Eine solche Ausstellung hat die Funktion, ein Abrutschen des Dichtrings von dem Stutzen zu verhindern. Diese Funktion wird dann erfüllt, wenn der Außendurchmesser der Ausstellung größer ist als der Innendurchmesser des Dichtrings, was sich in Anbetracht der relativ geringen Spaltbreite zwischen der Außenseite des Stutzens und der Innenseite des Dichtrings bereits durch relativ kleine Ausstellungen erreichen lässt. Die Ausstellung oder auch Umbördelung ist vorzugsweise trichterförmig konfiguriert, wobei der Winkel gegenüber der Mittellängsachse des Stutzens vorzugsweise in einem Bereich von 10° bis 100° liegt, insbesondere in einem Bereich von 30° bis 90°.

Selbstverständlich ist vor dem Aufbördeln bzw. der Ausbildung der Ausstellungen der Dichtring über den Stutzen zu schieben, da der Stutzen einstückig mit im Durchmesser größeren Bereichen des Laufradgehäuses ausgebildet ist. Das Laufradgehäuse kann in bekannter Weise zweischalig ausgebildet sein.

Um eine definierte Lage des Dichtrings während des Aufweitens des Stutzens sicherzustellen, kann als Montagehilfe ein Montagering auf den Stutzen geschoben werden, welcher die Lage des Dichtrings in Axialrichtung festlegt. Der Montagering kann sich hierbei an den im Durchmesser größeren Bereichen des Laufradgehäuses abstützen. Er ist hierzu mit seiner Innenquerschnittskontur an die Außenkontur des Laufradgehäuses im Übergangsbereich zu dessen Stutzen angepasst. Der Dichtring stützt sich in Axialrichtung an dem Montagering ab, so dass die von dem Spreizdorn ausgeübte Aufweitkraft von dem exakt positionierten Dichtring aufgefangen wird.

Der Montagering besteht vorzugsweise aus Kunststoff, der bereits beim ersten Betrieb des Turboladers schmilzt und sich somit nicht nachteilig auf die Gesamtmasse des Turboladergehäuses auswirkt und auch nicht die Relativverlagerbarkeit des Dichtrings gegenüber dem Stutzen hemmt.

Der Dichtring selbst ist vorzugsweise ein spanend bearbeitetes Bauteil, dessen Rundheit in Kombination mit dem Aufweitvorgang durch den Spreizdorn eine exakte Zentrierung des Dichtrings gegenüber dem Stutzen ermöglicht. Der Dichtring kann stoff- und/oder kraftschlüssig mit dem Auslassrohr verbunden sein. Dieser Verbindungsvorgang erfolgt, bevor der Dichtring über den Stutzen geschoben wird. Dadurch sind in der Zusammenbaulage keine Schweißarbeiten im sensiblen Auslassbereich des Innensystems notwendig. Es ergibt sich somit kein Schweißverzug des Innensystems und es treten auch keine Schweißspritzer auf.

Es ist im Rahmen der Erfindung auch möglich, dass der Dichtring einstückiger Bestandteil des Auslassrohrs ist, indem dieser durch eine endseitige Umstellung des Auslassrohrs gebildet wird. Hierzu kann das Ende des Auslassrohrs gewissermaßen nach innen umgestülpt werden. Diese Materialverdopplung bildet den Bereich des Dichtrings, wobei nur die innere "Lage" der Materialverdopplung mit dem Stutzen in Kontakt kommt. Diese Materialverdopplung ist allerdings notwendig, damit beim Aufweiten des Stutzens durch den Spreizdorn ein hinreichender Widerstand vorhanden ist, um die gewünschte Breite des Dichtspalts auszubilden.

Das erfindungsgemäße Turbinengehäuse umfasst im zusammengebauten Zustand somit ein Außengehäuse, in welchem ein Laufradgehäuse mit einem rohrförmigen Stutzen und ein Auslassrohr angeordnet sind. Der Stutzen greift in das Auslassrohr, durch welches Abgas von dem Stutzen in Richtung eines Auslassflansches überleitbar ist. Das Auslassrohr ist mit dem Laufradgehäuse relativverschieblich gekoppelt, wobei zwischen dem Stutzen und dem Auslassrohr ein Dichtring angeordnet ist. Wesentlich ist, dass der Stutzen endseitig wenigstens eine nach außen gerichtete Ausstellung aufweist, deren Außendurchmesser größer ist als der Innendurchmesser des Dichtrings. Dadurch wird verhindert, dass der Dichtring vom Innensystem abrutscht.

Weitere Einzelheiten werden nachfolgend anhand der in den Zeichnungen schematisch dargestellten Aufführungsbeispiele näher erläutert. Es zeigen:
- Figur 1: einen Querschnitt durch ein Turbinengehäuse;
- Figur 2: ein Detail des Dichtbereichs der Figur 1 mit eingesetztem Montagering;
- Figur 3: eine weitere Ausführungsform des Dichtbereichs im Detail und
- Figur 4: eine weitere Ausführungsform des Dichtsystems im Detail.

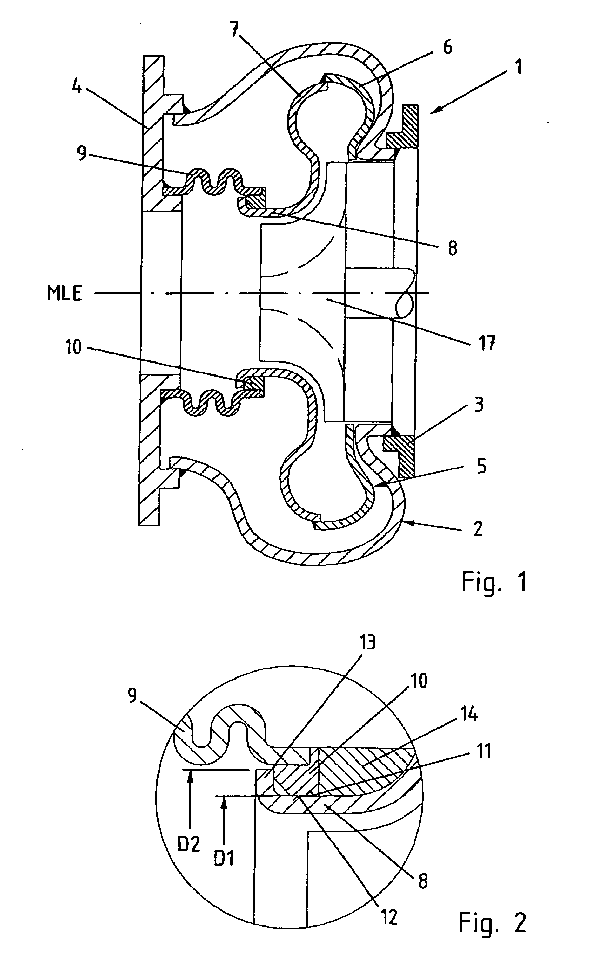

Figur 1 zeigt ein Turbinengehäuse 1 eines Abgasturboladers. Das Turbinengehäuse 1 umfasst ein Außengehäuse 2, das sich von einem Gehäuseflansch 3 bis zu einem Auslassflansch 4 erstreckt. Das Außengehäuse 2 ist sowohl mit dem Gehäuseflansch 3 als auch mit dem Auslassflansch 4 verschweißt und begrenzt einen gasdichten Innenraum. Innerhalb dieses Außengehäuses 2 befindet sich ein Laufradgehäuse 5, das aus zwei Blechschalen 6, 7 gebildet ist, die am Außenumfang des Laufradgehäuses 5 miteinander verschweißt sind. Die in der linken Bildebene dargestellte Blechschale 7 weist einen rohrförmigen Stutzen 8 auf, der sich in Richtung des Auslassflansches 4 erstreckt. Ein Turbinenrad 17 ragt bis in den Stutzen 8, welcher in seiner Kontur an die Außenkontur des Turbinenrads 17 angepasst ist. Der Stutzen 8 leitet das aus dem Laufradgehäuse 5 austretende Abgas über ein Auslassrohr 9 in Form eines Faltenbalgs dem Auslassflansch 4 zu, über welches das Abgas abgeführt wird. Das Auslassrohr 9 ist mit dem Auslassflansch 4 gasdicht verschweißt. An dem dem Auslassflansch 4 abgewandten Ende des Auslassrohrs 9 befindet sich ein Dichtring 10, welcher den Stutzen 8 außenseitig umgreift und in Figur 2 in vergrößerter Darstellung zu erkennen ist.

Der Dichtring 10 ist in nicht näher dargestellter Weise mit dem stutzenseitigen Ende des Auslassrohrs 9 verbunden, vorzugsweise mit diesem verschweißt oder verpresst. Der Dichtring 10 ist mit seinem Innendurchmesser D1 (Figur2) an den Außendurchmesser des zylindrisch ausgebildeten Stutzens 8 angepasst. Der Dichtring 10 ist gegenüber dem Stutzen in Axialrichtung, d.h. in Richtung der Mittellängsachse MLE des Stutzens 8 axial verlagerbar. Der Dichtspalt 10 zwischen der Außenseite 11 des Stutzens 8 und der Innenseite 12 ist allerdings sehr gering. Diese ist darauf zurückzuführen, dass der Stutzen 8 durch Einführen eines nicht näher dargestellten Spreizdorns in Umfangsrichtung aufgeweitet worden ist und gegen die Innenseite 12 des Dichtrings 10 gepresst worden ist. Die definierte Kraft zum Aufweiten des Stutzens 8 ist so gewählt worden, dass nach dem Entfernen des Spreizdorns der Stutzen 8 etwas zurückfedert, so dass sich die gewünschte Dichtspaltbreite ergibt, ohne jedoch zu einer Verklemmung zwischen dem Dichtring 10 und dem Stutzen 8 zu führen.

Zusätzlich ist zu dem Stutzen 8 endseitig eine nach außen gerichtete Ausstellung 13 zu erkennen, deren Außendurchmesser D2 größer ist als der Innendurchmesser D1 des Stutzens 8. Die Ausstellung 13 ist in diesem Ausführungsbeispiel ein umlaufender Kragen, der um 90° gegenüber der Mittellängsachse MLE des Stutzens 8 abgewinkelt worden ist.

Aus der Darstellung der Figur 2 wird deutlich, dass auf der der Ausstellung 13 abgewandten Seite des Dichtrings 10 ein Montagering 14 angeordnet ist. Der Montagering 14 ist in seiner Innenkontur an die Außenkontur des Stutzens 8 bzw. der Blechschale 7 angepasst und verhindert, dass der Dichtring 10 zu weit auf den Stutzen 8 verlagert wird. Die Lageorientierung bzw. Fixierung des Dichtrings 10 während der Montage ist wichtig, damit der Spreizdorn die Aufweitkraft gezielt auf den Dichtring 10 überträgt. Der Montagering 14 besteht aus einem Kunststoff, welcher bei Inbetriebnahme des Turboladers schmilzt. Der Montagering 14 besitzt den gleichen Außendurchmesser, wie der Dichtring 10.

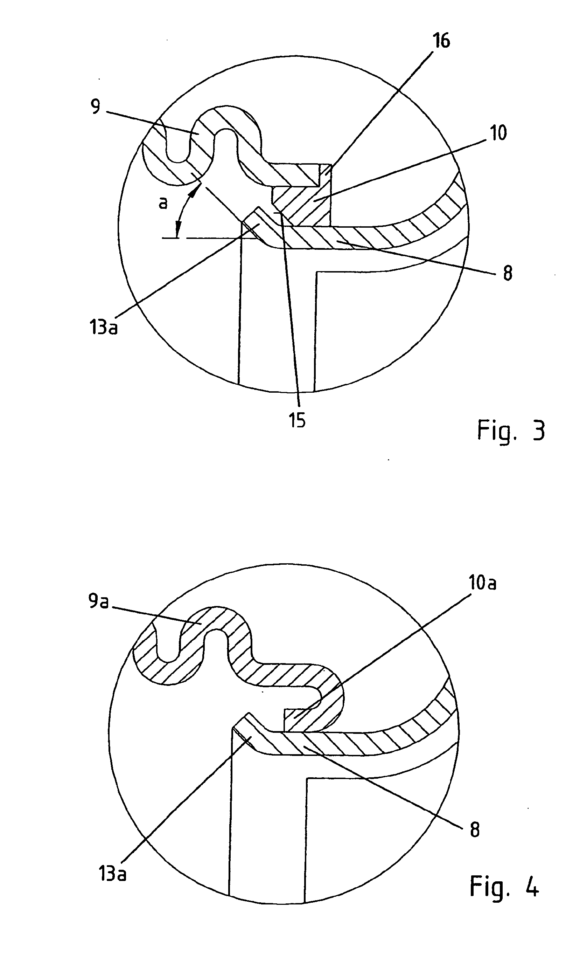

Während bei der Ausführungsform der Figur 2 die Ausstellung eine um 90° gegenüber der Mittellängsachse MLE umgestellte Bördelung ist, kann in noch bauraumsparender Weise vorgesehen sein, das Ende des Stutzens 8 nicht um 90° nach außen auszustellen, sondern um einen kleineren Winkel, wie beispielsweise 45°. Figur 3 zeigt eine alternative Ausführungsform, bei welcher der Winkel a nur 45° beträgt. Trotzdem ist zu erkennen, dass der Außendurchmesser D2 der Ausstellung 13a hinreichend groß genug ist, um ein Herunterrutschen des Dichtrings 10 von dem Stutzen 8 zu verhindern. Zudem kann der Dichtring 10 noch näher am Ende des Stutzens 8 platziert sein, da der Dichtring 10 eine dem Ende zugewandte Fase 15 aufweist, die in ihrer Neigung an den Winkel a der Ausstellung 13a angepasst ist. In diesem Ausführungsbeispiel beträgt der Winkel a etwa 45°. Auch die Fase 15 ist eine 45°-Schräge, bezogen auf die Innenseite 12 des Dichtrings 10.

Der Dichtring 10 besitzt eine in Radialrichtung gemessene Dicke, die etwa doppelt so groß ist, wie die Wandstärke des Stutzens 8 bzw. des Auslassrohrs 9. In diesem Ausführungsbeispiel steht der Dichtring 10 stirnseitig etwas über das Auslassrohr 9 vor und liegt an dessen Stirnseite über einen Kragen 16 an, der außen mit dem den Stutzen 8 umgreifenden Endabschnitt des Auslassrohrs 9 abschließt.

Der Außendurchmesser des Auslassrohrs 9 ist größer als der Außendurchmesser des Stutzens 8. Das ist darauf zurückzuführen, dass das Auslassrohr 9 in seinem mittleren Bereich als Faltenbalg konfiguriert ist. Im Anbindungsbereich an den Dichtring 10 bzw. den Auslassflansch 4 ist ein ungewellter, jeweils kreiszylindrischer Bereich vorhanden, um die Anbindung an den Auslassflansch 4 bzw. den Dichtring 10 zu ermöglichen.

Es ist möglich, dass der Dichtring 10 einstückiger Bestandteil des Auslassrohrs 9 ist. Figur 4 zeigt eine Variante, mit einer endseitigen, nach innen gerichteten Umstülpung. Dieser doppellagige Bereich des Auslassrohrs 9a übernimmt bei diesem Ausführungsbeispiel die Funktion des Dichtrings bzw. bildet den Dichtring 10a. Auf diese Weise kann die Anzahl der Bauteile noch weiter reduziert werden, ohne dass die Dichtwirkung zwischen dem Auslassrohr 9a und dem Stutzen 8 verringert wird. Auch bei dieser Variante wird der Stutzen 8 in nicht näher dargestellter Weise durch einen Spreizdorn aufgeweitet und gegen den Dichtring 10a des Auslassrohrs 9a gepresst. Wie zuvor beschrieben, wird auch eine Ausstellung 13a in Form eines umlaufenden Kragens gebildet.

### Bezugszeichen:

| | |
|---|---|
| 1 - | Turbinengehäuse |
| 2 - | Außengehäuse |
| 3 - | Gehäuseflansch |
| 4 - | Auslassflansch |
| 5 - | Laufradgehäuse |
| 6 - | Blechschale |
| 7 - | Blechschale |
| 8 - | Stutzen |
| 9 - | Auslassrohr |
| 9a - | Auslassrohr |
| 10 - | Dichtring |
| 10a - | Dichtring |
| 11 - | Außenseite |
| 12 - | Innenseite |
| 13 - | Ausstellung |
| 13a - | Ausstellung |
| 14 - | Montagering |
| 15 - | Fase |
| 16 - | Kragen |
| 17 - | Turbinenrad |

| | |
|---|---|
| a - | Winkel |
| MLE - | Mittellängsachse |
| D1 - | Innendurchmesser |
| D2 - | Außendurchmesser |

## Patentansprüche

1. Verfahren zur Herstellung eines Turbinengehäuses eines Abgasturboladers, umfassend ein in einem Außengehäuse (2) angeordnetes Laufradgehäuse (5) mit einem rohrförmigen Stutzen (8), welcher in ein Auslassrohr (9, 9a) fasst, über welches Abgas von dem Laufradgehäuse (5) in Richtung eines Auslassflansches (4) überleitbar ist und wobei das Auslassrohr (9, 9a) mit dem Laufradgehäuse (5) relativverschieblich gekoppelt ist, und eine an dem Auslassrohr (9, 9a) angeordneter metallischer Dichtring (10, 10a) über den Stutzen (8) geschoben wird, **dadurch gekennzeichnet, dass** anschließend ein Spreizdorn in den Stutzen (8) eingeführt wird, um den Stutzen (8) aufzuweiten, wobei der Stutzen (8) endseitig zumindest bereichsweise nach außen ausgestellt wird, um wenigstens eine Ausstellung (13) zu bilden, deren Außendurchmesser (D2) größer ist als der Innendurchmesser (D1) des Dichtrings (10, 10a).

2. Verfahren nach Anspruch 1, **dadurch gekennzeichnet, dass** der Stutzen (8) mit einer definierten Kraft gegen den Dichtring (10, 10a) gedrückt wird, wobei der Stutzen (8) nach dem Entfernen des Spreizdorns zurückfedert und sich eine definierte Spaltbreite zwischen dem Dichtring (10, 10a) und der Außenseite (11) des Stutzens (8) einstellt.

3. Verfahren nach Anspruch 1, **dadurch gekennzeichnet, dass** die Ausstellung (13) trichterförmig ausgebildet wird, mit einem Winkel (a) gegenüber der Mittellängsachse (MLE) des Stutzens (8) in einem Bereich von 10° bis 100°.

4. Verfahren nach Anspruch 1 oder 3, **dadurch gekennzeichnet, dass** mindestens zwei Ausstellungen (13) vorgesehen sind.

5. Verfahren nach einem der Ansprüche 1 bis 4, **dadurch gekennzeichnet, dass** vor dem Aufschieben des Dichtrings (10) ein Montagering (14) auf den Stutzen (8) geschoben wird, um die Lage des Dichtrings (10) in Axialrichtung festzulegen.

6. Verfahren nach einem der Ansprüche 1 bis 5, **dadurch gekennzeichnet, dass** der Dichtring (10) stoff- oder kraftschlüssig mit dem Auslassrohr (9) verbunden wird.

7. Verfahren nach einem der Ansprüche 1 bis 5, **dadurch gekennzeichnet, dass** der Dichtring (10a) einstückiger Bestandteil des Auslassrohrs (9a) ist, und durch eine endseitige Umstellung des Auslassrohrs (9a) gebildet wird.

8. Turbinengehäuse eines Abgasturboladers, umfassend ein Außengehäuse (2), in welchem ein Laufradgehäuse (5) mit einem rohrförmigen Stutzen (8) und ein Auslassrohr (9, 9a) angeordnet ist, wobei der Stutzen (8) in das Auslassrohr (9, 9a) fasst, durch welches Abgas von dem Stutzen (8) in Richtung eines Auslassflansches (4) überleitbar ist, wobei das Auslassrohr (9, 9a) mit dem Laufradgehäuse (5) relativverschieblich gekoppelt ist, und wobei zwischen Stutzen (8) und Auslassrohr (9, 9a) ein Dichtring (10, 10a) angeordnet ist, **dadurch gekennzeichnet, dass** der Stutzen (8) endseitig wenigstens eine nach außen gerichtete Ausstellung (13) aufweist, deren Außendurchmesser (D2) größer ist als der Innendurchmesser (D1) des Dichtrings (10, 10a).

9. Turbinengehäuse nach Anspruch 8, **dadurch gekennzeichnet, dass** die die Ausstellung (13) trichterförmig ist mit einem Winkel (a) gegenüber der Mittellängsachse (MLE) des Stutzens (8) in einem Bereich von 10° bis 100°.

10. Turbinengehäuse nach Anspruch 8, **dadurch gekennzeichnet, dass** wenigstens zwei über den Umfang verteilte Ausstellungen (13) vorgesehen sind.

11. Turbinengehäuse nach Anspruch 8, **dadurch gekennzeichnet, dass** die Ausstellung (13) ein umlaufender Kragen ist.

12. Turbinengehäuse nach einem der Ansprüche 8 bis 11, **dadurch gekennzeichnet, dass** auf der der Ausstellung abgewandten Seite des Dichtrings (10) ein Montagering (14) auf dem Stutzen (8) angeordnet ist.

13. Turbinengehäuse nach Anspruch 12, **dadurch gekennzeichnet, dass** der Montagering (14) aus Kunststoff besteht.

14. Turbinengehäuse nach einem der Ansprüche 8 bis 13, **dadurch gekennzeichnet, dass** der Dichtring (10) aus Metall besteht und stoff- oder kraftschlüssig mit dem Auslassrohr (9) verbunden wird.

15. Turbinengehäuse nach einem der Ansprüche 8 bis 14, **dadurch gekennzeichnet, dass** der Dichtring (10a) einstückiger Bestandteil des Auslassrohrs (9a) ist und durch eine endseitige Umstellung des Auslassrohrs (9a) gebildet ist.

16. Turbinengehäuse nach einem der Ansprüche 8 bis 15, **dadurch gekennzeichnet, dass** das Auslassrohr (9, 9a) einen als Faltenbalg ausgebildeten Längenabschnitt aufweist.

## Claims

1. A method for producing a turbine housing for an exhaust turbocharger, comprising a compressor wheel housing (5) arranged in an outer housing (2) and with a tubular connecting port (8) which engages in an outlet pipe (9, 9a), via which exhaust gas may be passed from the compressor wheel housing (5) towards an outlet flange (4), the outlet pipe (9, 9a) being coupled with the compressor wheel housing (5) so as to be capable of relative displacement, and a metallic sealing ring (10, 10a) arranged on the outlet pipe (9, 9a) being pushed over the connecting port (8), **characterised in that** an expanding mandrel is then introduced into the connecting port (8) to widen the connecting port (8), the connecting port (8) being flared outwards at least in places at the end in order to form at least one flared portion (13), the external diameter (D2) of which is greater than the internal diameter (D1) of the sealing ring (10, 10a).

2. A method according to claim 1, **characterised in that** the connecting port (8) is pressed with a defined force against the sealing ring (10, 10a), the connecting port (8) springing back after removal of the expanding mandrel and a defined gap width being established between the sealing ring (10, 10a) and the outside (11) of the connecting port (8).

3. A method according to claim 1, **characterised in that** the flared portion (13) is funnel-shaped, with an angle (a) relative to the central longitudinal axis (MLE) of the connecting port (8) in a range from 10° to 100°.

4. A method according to claim 1 or claim 3, **characterised in that** at least two flared portions (13) are provided.

5. A method according to any one of claims 1 to 4, **characterised in that**, before the sealing ring (10) is pushed on, a mounting ring (14) is pushed onto the connecting port (8), in order to fix the position of the sealing ring (10) in the axial direction.

6. A method according to any one of claims 1 to 5, **characterised in that** the sealing ring (10) is bonded or non-interlockingly connected to the outlet pipe (9).

7. A method according to any one of claims 1 to 5, **characterised in that** the sealing ring (10a) is a one-piece component of the outlet pipe (9a), and is formed by reversal of the end of the outlet pipe (9a).

8. A turbine housing of an exhaust turbocharger, comprising an outer housing (2), in which is arranged a compressor wheel housing (5) with a tubular connecting port (8) and an outlet pipe (9, 9a), the connecting port (8) engaging in the outlet pipe (9, 9a), through which exhaust gas may be passed from the connecting port (8) towards an outlet flange (4), the outlet pipe (9, 9a) being coupled with the compressor wheel housing (5) so as to be capable of relative displacement, and a sealing ring (10, 10a) being arranged between connecting port (8) and outlet pipe (9, 9a), **characterised in that** the connecting port (8) comprises at least one outwardly directed flared portion (13) at the end, the external diameter (D2) of which is greater than the internal diameter (D1) of the sealing ring (10, 10a).

9. A turbine housing according to claim 8, **characterised in that** the flared portion (13) is funnel-shaped, with an angle (a) relative to the central longitudinal axis (MLE) of the connecting port (8) in a range from 10° to 100°.

10. A turbine housing according to claim 8, **characterised in that** at least two flared portions (13) are provided, distributed over the circumference.

11. A turbine housing according to claim 8, **characterised in that** the flared portion (13) is a circumferential collar.

12. A turbine housing according to any one of claims 8 to 11, **characterised in that** a mounting ring (14) is arranged on the connecting port (8) on the side of the sealing ring (10) remote from the flared portion.

13. A turbine housing according to claim 12, **characterised in that** the mounting ring (14) consists of plastics.

14. A turbine housing according to any one of claims 8 to 13, **characterised in that** the sealing ring (10) consists of metal and is bonded or non-interlockingly connected to the outlet pipe (9).

15. A turbine housing according to any one of claims 8 to 14, **characterised in that** the sealing ring (10a) is a one-piece component of the outlet pipe (9a), and is formed by reversal of the end of the outlet pipe (9a).

16. A turbine housing according to any one of claims 8 to 15, **characterised in that** the outlet pipe (9, 9a) has a portion of its length formed as bellows.

## Revendications

1. Procédé de fabrication d'un boîtier de turbine d'un turbocompresseur à gaz d'échappement, comprenant un boîtier de rotor (5) agencé dans un boîtier extérieur (2) avec une tubulure (8) qui débouche dans un tube d'évacuation (9, 9a), par lequel des gaz d'échappement peuvent être transférés du boîtier de rotor (5) vers une bride d'évacuation (4) et le tube d'évacuation (9, 9a) étant couplé au boîtier de rotor (5) en déplacement relatif et une bague d'étanchéité (10, 10a) métallique agencée sur le tube d'évacuation (9, 9a) étant enfilée sur la tubulure (8), **caractérisé en ce qu'**un mandrin extensible est ensuite introduit dans la tubulure (8) afin de l'élargir, la tubulure (8) étant à ses extrémités au moins partiellement dirigée vers l'extérieur afin de former au moins une projection (13), dont le diamètre extérieur (D2) est supérieur au diamètre intérieur (D1) de la bague d'étanchéité (10, 10a).

2. Procédé selon la revendication 1, **caractérisé en ce que** la tubulure (8) est pressée avec une force définie contre la bague d'étanchéité (10, 10a), la tubulure (8) se détendant après le retrait du mandrin extensible et établissant une largeur de fente définie entre la bague d'étanchéité (10, 10a) et le côté extérieur (11) de la tubulure (8).

3. Procédé selon la revendication 1, **caractérisé en ce que** la projection (13) est réalisée en forme d'entonnoir avec un angle (a) par rapport à l'axe médian longitudinal (MLE) de la tubulure (8) dans une plage de 10 à 100°.

4. Procédé selon la revendication 1 ou 3, **caractérisé en ce qu'**au moins deux projections (13) sont prévues.

5. Procédé selon l'une quelconque des revendications 1 à 4, **caractérisé en ce qu'**un anneau de montage (14) est enfilé sur la tubulure (8) avant l'enfilage de la bague d'étanchéité (10) afin de déterminer la position de la bague d'étanchéité (10) dans le sens axial.

6. Procédé selon l'une quelconque des revendications 1 à 5, **caractérisé en ce que** la bague d'étanchéité (10) est reliée par matière ou à force au tube d'évacuation (9).

7. Procédé selon l'une quelconque des revendications 1 à 5, **caractérisé en ce que** la bague d'étanchéité (10a) est un élément d'un seul tenant du tube d'évacuation (9a) et est formée par une adaptation côté extrémité du tube d'évacuation (9a).

8. Boîtier de turbine d'un turbocompresseur à gaz d'échappement, comprenant un boîtier extérieur (2), dans lequel un boîtier de rotor (5) est disposé avec une tubulure (8) et un tube d'évacuation (9, 9a), la tubulure (8) débouchant dans le tube d'évacuation (9, 9a), par lequel des gaz d'échappement peuvent être transférés de la tubulure (8) vers une bride d'évacuation (4), le tube d'évacuation (9, 9a) étant couplé en déplacement relatif au boîtier de rotor (5), et une bague d'étanchéité (10, 10a) étant disposée entre la tubulure (8) et le tube d'évacuation (9, 9a), **caractérisé en ce que** la tubulure (8) présente sur son extrémité au moins une projection (13) dirigée vers l'extérieur, dont le diamètre extérieur (D2) est supérieur au diamètre intérieur (D1) de la bague d'étanchéité (10, 10a).

9. Boîtier de turbine selon la revendication 8, **caractérisé en ce que** la projection (13) présente une forme d'entonnoir avec un angle (a) par rapport à l'axe médian longitudinal (MLE) de la tubulure (8) dans une plage de 10 à 100°.

10. Boîtier de turbine selon la revendication 8, **caractérisé en ce qu'**au moins deux projections (13) réparties sur la périphérie sont prévues.

11. Boîtier de turbine selon la revendication 8, **caractérisé en ce que** la projection (13) est une collerette circulaire.

12. Boîtier de turbine selon l'une quelconque des revendications 8 à 11, **caractérisé en ce qu'**un anneau de montage (14) est disposé sur la tubulure (8) sur le côté éloigné de la projection de la bague d'étanchéité (10).

13. Boîtier de turbine selon la revendication 12, **caractérisé en ce que** l'anneau de montage (14) est en matière plastique.

14. Boîtier de turbine selon l'une quelconque des revendications 8 à 13, **caractérisé en ce que** la bague d'étanchéité (10) est en métal et est reliée par matière ou à force au tube d'évacuation (9).

15. Boîtier de turbine selon l'une quelconque des revendications 8 à 14, **caractérisé en ce que** la bague d'étanchéité (10a) est un élément monobloc avec le tube d'évacuation (9a) et est formée par une adaptation côté extrémité du tube d'évacuation (9a).

16. Boîtier de turbine selon l'une quelconque des revendications 8 à 15, **caractérisé en ce que** le tube d'évacuation (9, 9a) présente une section longitudinale réalisée comme un soufflet.
